# EUROPÄISCHE PATENTSCHRIFT

(11) **EP 0 943 076 B1**
(45) Veröffentlichungstag und Bekanntmachung des Hinweises auf die Patenterteilung: **10.05.2000**
(21) Anmeldenummer: 97951190.4
(22) Anmeldetag: 13.11.1997
(51) Int. Cl.: G01F 1/38, F15C 5/00

(54) **MIKROMECHANISCH GEFERTIGTE FLUSSRESTRIKTIONSVORRICHTUNG**
MICROMECHANICALLY PRODUCED FLOW-RESTRICTION DEVICE
DISPOSITIF DE REDUCTION D'ECOULEMENT PRODUIT SELON UN PROCEDE MICROMECANIQUE

(30) Priorität: 03.12.1996 DE 19650116; 28.01.1997 DE 29701418 U
(43) Veröffentlichungstag der Anmeldung: 22.09.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: WOIAS, Peter,Dr., D-81735 München (DE)
(74) Vertreter: Schoppe, Fritz, Dipl.-Ing.
(86) Internationale Anmeldenummer: EP9706342
(87) Internationale Veröffentlichungsnummer: WO9825110

(56) Entgegenhaltungen:
- EP-A- 0 435 237
- DD-A- 285 188
- DE-A- 3 814 150
- US-A- 5 377 524
- US-A- 5 515 735
- OOSTERBROEK, R.E. ET AL.: "Designing, Realization and Characterization of a Novel Capacitive Pressure/Flow Sensor" TRANSDUCERS 97. DIGEST OF TECHNICAL PAPERS, Bd. 1, 16. - 19.Juni 1997, US-CHICAGO, Seiten 151-154, XP002060311
- BOILLAT, M.A. ET AL.: "A Differential Pressure Liquid Flow Sensor for Flow Regulation and Dosing Systems" PROC. IEEE MICRO ELECTRO MECHANICAL SYSTEMS 1995, 29.Januar 1995 - 2.Februar 1995, NL-AMSTERDAM, Seiten 350-352, XP002060312
- PATENT ABSTRACTS OF JAPAN vol. 017, no. 550 (P-1624), 4.Oktober 1993 & JP 05 157599 A (CANON INC), 22.Juni 1993, in der Anmeldung erwähnt
- WERTHSCHUETZKY R: "EINSATZ VON SILIZIUMSENSOREN IN PROZESSMESSGERAETEN ZUR DRUCKMESSUNG - STAND UND TENDENZEN" TECHNISCHES MESSEN TM, Bd. 59, Nr. 9, 1.September 1992, DE-MÜNCHEN, Seiten 340-346, XP000311729 in der Anmeldung erwähnt

## Beschreibung

Die vorliegende Erfindung bezieht sich auf eine Flußrestriktionsvorrichtung und insbesondere auf eine mikromechanisch gefertigte Flußrestriktionsvorrichtung.

Mikromechanisch gefertigte Fluidkanäle sind beispielsweise auf dem Gebiet der Flüssigkeitsdosierung bekannt. Ein einfaches Dosierungssystem besteht beispielsweise aus einem Fluidreservoir, einen Druckgeber und einem Fluidkanal mit einem definierten Flußwiderstand.

In der Technik sind ferner mikromechanisch gefertigte Multisensoren für eine Fluß-, Temperatur- und Druck-Messung bekannt. Derartige Systeme weisen eine mikromechanische Kapillare auf der Rückseite eines Substrats und auf der Vorderseite eines Substrats angeordnete piezoelektrische Drucksensoren auf. Nachteilig an derartigen bekannten Systemen sind die aufwendige Herstellung und ferner die hohen Kosten der piezoelektrischen Drucksensoren.

Aus der DD-A-285188 ist ein eine Kapillare aufweisender Durchflußsensor zur kontinuierlichen Messungen von Gasvolumenströmen bekannt. Bei diesem bekannten Durchflußsensor wird durch einen Druckabfall über eine Kapillare ein Differenzdruck zwischen einem Eingangsstauraum und einem Ausgangsstauraum bewirkt. Dieser Differenzdruck wird mittels einer eine verstimmbare Widerstandsmeßbrücke aufweisenden Membran erfaßt und als Maß für einen Gasvolumenstrom verwendet.

In den Patent Abstracts of Japan, Sect. P, Vol. 17 (1993), Nr. 550 (P-1624), ist ein Flußratenerfassungselement beschrieben, das einen kleinen Kanal aufweist, wobei innerhalb der Kanalwände desselben ein Druckerfassungselement angeordnet ist. Der erfaßte Druck dient zum Regeln der Flüssigkeitsflußrate, wobei eine feine Steuerung der Transportgeschwindigkeit der Flüssigkeit erreicht werden kann.

Die Druckschrift "Einsatz von Siliziumsensoren in Prozeßmeßgeräten zur Druckmessung - Stand und Tendenzen", Technisches Messen 59 (1992) 9, S. 340 - 346, enthält eine Erläuterung von piezoresistiven und kapazitiven Siliziumsensoren und deren Anwendungsgebieten.

In der EP-A-0435237 ist ein elektronisches Mikroventil beschrieben, das aus einem Siliziumsubstrat und einer freistehenden, flexiblen, dielektrischen Verschlußplatte besteht, wobei zwischen der Verschlußplatte und dem Siliziumsubstrat ein Zwischenraum angeordnet ist. Das Siliziumsubstrat weist eine Einlaßöffnung auf, während in der Veschlußplatte Auslaßöffnungen derart vorgesehen sind, daß die Verschlußplatte die Einlaßöffnung in einem nicht-angeregten Zustand offen läßt und in einem angeregten Zustand verschließt.

Die DE-A-3814150 bezieht sich ebenfalls auf eine Ventilanordnung aus mikrostrukturierten Komponenten. Bei dieser Ventilanordnung ist ein Betätigungselement relativ zu einem Strömungswegverteiler bewegbar, um dadurch je nach Schaltposition Fluidwege freizugeben oder zu verschließen.

Aus der US-A-5377524 ist eine Mikroflußmeßvorrichtung bekannt, die einen kapazitiven Drucksensor verwendet. Bei der bekannten Druckmeßvorrichtung sind in einer Trägerplatte eine Einlaßöffnung und eine Auslaßöffnung vorgesehen. Auf der Trägerplatte ist ein strukturiertes Substrat angeordnet. Das Substrat ist derart strukturiert, daß es zum einen zusammen mit der Trägerplatte einen Kanal und zum anderen mit der Trägerplatte einen kapazitiven Drucksensor definiert. Der Kanal ist ausgebildet, um einen Flußwiderstand zu definieren. Der kapazitive Druckaufnehmer ist durch eine Membran mit zugehöriger Membranelektrode und eine auf der Trägerplatte beabstandet von der Membranelektrode angeordnete Gegenelektrode gebildet. Gemäß der US-A-5377524 ist der kapazitive Druckaufnehmer außerhalb des Strömungswegs angeordnet, nämlich in einem Seitenzweig, um zu ermöglichen, eine Druckdifferenz zwischen dem an der Einlaßöffnung herrschenden Druck und dem an der Auslaßöffnung herrschenden Druck zu messen.

In Boillat, M.A. u.a.: "A Differential Pressure Liquid Flow Sensor for Flow Regulation and Dosing Systems", PROC. IEEE MICRO ELECTRO MECHANICAL SYSTEMS 1995, 29.1.95 - 2.2.95, NL-Amsterdam, Seiten 350 - 352, ist ein Flußsensor beschrieben, bei dem zwei piezoresistive Niederdrucksensoren vorgesehen sind, um den Druck im Strömungsweg vor und nach einem Kanal, der eine Flußrestriktion darstellt, zu erfassen.

Ausgehend von dem genannten Stand der Technik besteht die Aufgabe der vorliegenden Erfindung darin, eine kostengünstige und einfache mikromechanisch gefertigte Flußrestriktionsvorrichtung mit zumindest einem integrierten Drucksensor zu schaffen.

Diese Aufgabe wird durch eine mikromechanisch gefertigte Flußrestriktionsvorrichtung gemäß Anspruch 1 gelöst.

Die vorliegende Erfindung schafft eine mikromechanisch gefertigte Flußrestriktionsvorrichtung, bei der in einer ersten Hauptoberfläche eines Substrats eine erste Durchlaßöffnung bzw. eine Einlaßöffnung gebildet ist. In der zweiten Hauptoberfläche des Substrats ist ein Kanal gebildet, der an einem ersten Ende desselben mit der Einlaßöffnung fluidmäßig verbunden ist. Eine zweite Durchlaßöffnung, bzw. Auslaßöffnung, ist vorgesehen, die mit einem zweiten Ende des Kanals fluidmäßig verbunden ist. Die Einlaßöffnung, der Kanal und die Auslaßöffnung definieren einen Strömungspfad Eine in dem Substrat gebildete Membran steht mit der Einlaßöffnung in Fluidverbindung, wobei zumindest auf der Membran eine Membranelektrode gebildet ist. Eine Abdeckvorrichtung ist auf die zweite Hauptoberfläche des Substrats aufgebracht, derart, daß die Abdeckvorrichtung zusammen mit dem Kanal einen Flußwiderstand der Flußrestriktionsvorrichtung definiert, wobei die Abdeckvorrichtung eine Gegenelektrode aufweist, die der Membranelektrode beabstandet von derselben gegenüberliegt, derart, daß die Membranelektrode und die Gegenelektrode einen kapazitiven Druckaufnehmer definieren, wobei der kapazitive Druckaufnehmer an einer Wandung des Strömungspfads angeordnet ist.

Bei einem bevorzugten Ausführungsbeispiel der vorliegenden Erfindung ist die zweite Durchlaßöffnung bzw. Auslaßöffnung in der ersten Hauptoberfläche des Substrats gebildet, und steht mit einer zweiten in dem Substrat gebildeten Membran, die mit einer Membranelektrode versehen ist, in fluidmäßiger Verbindung. Die Abdeckvorrichtung weist eine zweite Gegenelektrode auf, die der zweiten Membranelektrode beabstandet von derselben gegenüberliegt, derart, daß die zweite Membranelektrode und die zweite Gegenelektrode einen kapazitiven Druckaufnehmer definieren. Bei diesem Ausführungsbeispiel weist die mikromechanisch gefertigte Struktur somit eine Flußrestriktionsvorrichtung und zwei Drucksensoren auf, wobei einer der Drucksensoren in Flußrichtung vor dem den Flußwiderstand definierenden Kanal gebildet ist, während der andere Drucksensor in Flußrichtung hinter dem den Flußwiderstand definierenden Kanal gebildet ist.

Bei der mikromechanisch gefertigten Flußrestriktionsvorrichtung gemäß der vorliegenden Erfindung dient die Abdeckvorrichtung sowohl zur Definition der Restriktion der Flußrestriktionsvorrichtung als auch als Gegenelektrode des zumindest einen Drucksensors, der als kapazitiver Sensor ausgebildet ist. Somit werden nur zwei Chipteile, das Substrat und die Abdeckvorrichtung, benötigt. Vorzugsweise ist sowohl die Abdeckvorrichtung als auch das Substrat aus Silizium gebildet, wobei es jedoch auch möglich ist, daß die Abdeckvorrichtung aus Pyrexglas besteht, das den gleichen thermischen Ausdehnungskoeffizienten wie Silizium aufweist.

Die bei der erfindungsgemäßen Flußrestriktionsvorrichtung gebildeten kapazitiven Sensoren sind kostengünstig herzustellen und weisen einen geringen Temperaturgang auf. Somit wird keine Kompensationselektronik benötigt. Auf dem Flußmeßchip, der durch die mikromechanisch gefertigte Flußrestriktionsvorrichtung gebildet ist, ist vorzugsweise keine weitere Elektronik angeordnet, da ein derartiger Flußmeßchip mit Gammastrahlen desinfiziert wird. Eine solche Gammastrahlung würde eine auf dem Chip befindliche Elektronik, beispielsweise MOS-FETs und dergleichen, zerstören.

Die erfindungsgemäße Flußrestriktionsvorrichtung kann beispielsweise vorteilhaft in einem Dosiersystem, das nach dem Überdruckprinzip arbeitet, eingesetzt werden. Bei einem weiteren Ausführungsbeispiel der vorliegenden Erfindung ist in dem Bereich des Kanals der Flußrestriktionsvorrichtung ferner ein Temperatursensor angeordnet, so daß mittels der erfindungsgemäßen Flußrestriktionsvorrichtung zusammen mit einer geeigneten Steuervorrichtung die Möglichkeit einer Kompensation von Temperatureffekten besteht. Ferner kann in diesem Fall eine externe Beeinflussung der Dosierrate bewirkt werden. Anwendungsgebiete für die erfindungsgemäße Flußrestriktionsvorrichtung umfassen die Medizintechnik, beispielsweise die Medikamentendosierung, die chemische Analytik und Reaktionstechnik, beispielsweise die Feindosierung von Chemikalien, den Maschinenbau, beispielsweise bei der Schmieröldosierung, sowie die Biotechnologie, beispielsweise die Dosierung von Nährmedien in Fermentationsprozessen.

Ein bevorzugtes Ausführungsbeispiel der vorliegenden Erfindung wird nachfolgend bezugnehmend auf die beiliegenden Zeichnungen näher erläutert. Es zeigen:
- Fig. 1: eine Querschnittansicht eines bevorzugten Ausführungsbeispiels einer Flußrestriktionsvorrichtung gemäß der vorliegenden Erfindung; und
- Fig. 2: eine Draufsicht der in Fig. 1 dargestellten Flußrestriktionsvorrichtung ohne Abdeckvorrichtung.

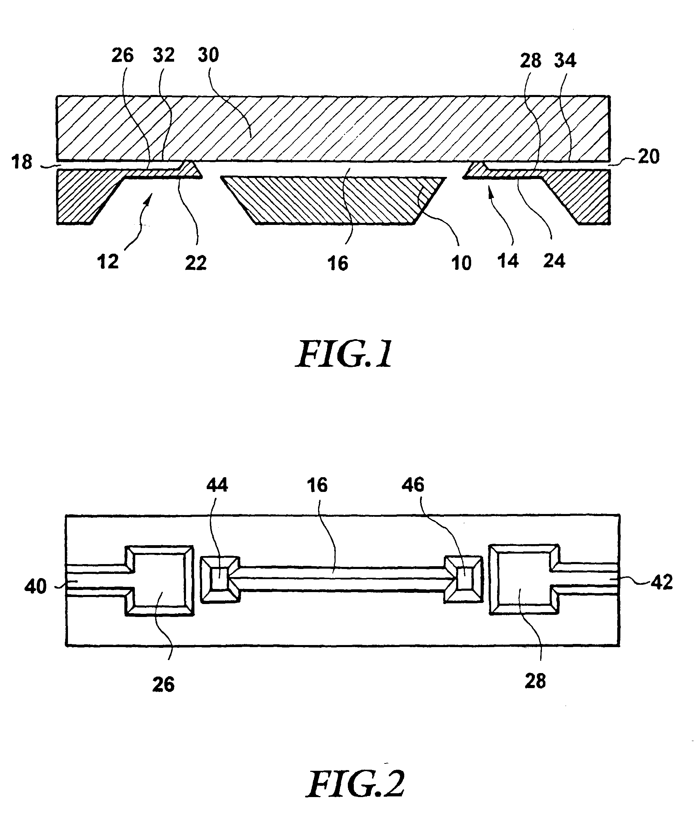

Wie in Fig. 1 dargestellt ist, weist die erfindungsgemäße mikromechanisch gefertigte Flußrestriktionsvorrichtung ein Substrat 10 auf, das bei dem bevorzugten Ausführungsbeispiel aus Silizium besteht. In der in Fig. 1 nach unten gerichteten Hauptoberfläche des Substrats 10 sind eine Einlaßöffnung 12 und eine Auslaßöffnung 14 gebildet. In der zweiten Hauptoberfläche des Substrats 10, bei der Darstellung von Fig. 1 der oberen Oberfläche, ist eine Ausnehmung 16 gebildet, die den Kanal der Flußrestriktionsvorrichtung definiert. Die Ausnehmung 16 ist derart in dem Substrat gebildet, daß dieselbe eine Verbindung zu der Einlaßöffnung 12 und der Auslaßöffnung 14 aufweist, die bei der späteren Verwendung des Bauelementes als Fluidverbindung zwischen der Einlaßöffnung 12 und dem Kanal 16 sowie dem Kanal 16 und der Auslaßöffnung 14 dient.

Bei dem in Fig. 1 dargestellten Ausführungsbeispiel sind in der zweiten Hauptoberfläche des Substrats 10 ferner zwei Ausnehmungen 18 und 20 definiert, die zumindest teilweise der Einlaßöffnung 12 und der Auslaßöffnung 14 gegenüberliegend angeordnet sind. Durch den zwischen der Ausnehmung 18 und der Einlaßöffnung 12 verbleibenden Teil des Substrats 10 ist eine Membran 22 gebildet. Durch den zwischen der Ausnehmung 20 und der Auslaßöffnung 14 verbleibenden Teil des Substrats 10 ist eine weitere Membran 24 gebildet. Auf der Membran 22 ist eine Membranelektrode 26 gebildet. Die Membranelektrode 26 kann beispielsweise durch das Aufbringen einer Metallisierungsschicht gebildet sein. Auf der Membran 24 ist eine Membranelektrode 28 gebildet. Die Membranelektrode 28 kann wiederum beispielsweise mittels einer Metallisierungsschicht gebildet sein. Zwischen der Metallisierung, die die Elektroden 26 und 28 bildet, und dem Substrat kann ferner eine Isolationsschicht angebracht sein. Die Membranelektroden 26 und 28 sind vorzugsweise nach außen hin verlängert, um einen elektrischen Anschluß derselben zu ermöglichen.

Auf die zweite Hauptoberfläche des Substrats 10 ist nun eine Abdeckvorrichtung 30 aufgebracht, die in dem Bereich, in dem der Kanal 16 in dem Substrat 10 gebildet ist, zusammen mit dem Kanal 16 den Flußwiderstand der Flußrestriktionsvorrichtung definiert. Dieser Flußwiderstand ist durch die Querschnittfläche des Kanals 16, die von der Unterseite und den zwei Seitenflächen der Ausnehmungen sowie der Unterseite der Abdeckvorrichtung 30 definiert ist, festgelegt. Die Abdeckvorrichtung 30 weist auf ihrer Unterseite ferner zwei Gegenelektroden 32 und 34 auf, die gegenüber den Membranelektroden 26 und 28 beabstandet von denselben angeordnet sind.

Die Beabstandung der Membranelektroden von den Gegenelektroden ist bei dem in Fig. 1 dargestellten Ausführungsbeispiel durch die Ausnehmungen 18 und 20 in dem Substrat 10 gewährleistet. Alternativ könnten die Membranelektroden jedoch auf der zweiten Hauptoberfläche des Substrats gebildet sein, wobei die Abdeckvorrichtung 30 in dem Bereich, in dem die Gegenelektroden 32 und 34 gebildet sind, Ausnehmungen aufweist, so daß wiederum ein definierter Abstand zwischen den jeweiligen Membranelektroden und Gegenelektroden vorliegt. Ferner ist es möglich, daß sowohl die Abdeckvorrichtung 30 als auch das Substrat 10 Ausnehmungen aufweisen, um den Abstand zwischen den Membranelektroden und den Gegenelektroden zu definieren.

Die Gegenelektroden 32 und 34 sind ebenfalls vorzugsweise seitlich herausgeführt, um einen elektrischen Anschluß derselben zu ermöglichen. Im Bereich der Membranen 22 und 24 überlappen die Membranelektroden 26 und 28 und die Gegenelektroden 32 und 34 mit einem definierten Abstand zueinander um eine definierte Fläche, so daß dieselben eine vorbestimmte Kapazität festlegen. Liegt nun an der Einlaßöffnung 12 ein unter Druck gesetztes Fluid vor, so verformt sich die Membran 22 und somit die auf derselben vorliegende elastische Elektrode 26, wodurch die Kapazität der Elektrodenanordnung 26 und 32 verändert wird. Somit kann der Druck an der Einlaßöffnung 12 bestimmt werden. In gleicher Weise ist es möglich, den Druck an der Auslaßöffnung 14 zu bestimmen.

In Fig. 2 ist eine Draufsicht der in Fig. 1 dargestellten Flußrestriktionsvorrichtung gezeigt, bei der die Abdeckvorrichtung weggelassen ist. In Fig. 2 ist dargestellt, wie die Membranelektroden 26 und 28 mit Zuführungsleitungen 40 und 42 versehen sind, die zur elektrischen Verbindung der Elektroden mit einer Auswertungsschaltung oder Steuereinrichtung dienen. Wie in Fig. 2 zu sehen ist, weist bei dem dargestellten Ausführungsbeispiel der Kanal 16 einen dreieckigen Querschnitt auf. Der Kanal kann jedoch alternativ abhängig vom Herstellungsverfahren auch einen anderen Querschnitt aufweisen, beispielsweise einen trapezförmigen Querschnitt. In Fig. 2 ist ferner die Fluidverbindung 44 zwischen der Einlaßöffnung 12 und dem Kanal 16 sowie die Fluidverbindung 46 zwischen dem Kanal 16 und der Auslaßöffnung 14 zu erkennen.

Die oben beschriebene mikromechanisch gefertigte Flußrestriktionsvorrichtung kann beispielsweise aus Silizium mittels herkömmlicher mikromechanischer Verfahrensschritte gefertigt werden. Dabei werden zunächst die Ausnehmungen 12 und 14 beispielsweise mittels eines KOH-Ätzens wie dargestellt trapezförmig in die erste Hauptoberfläche des Substrats 10 geätzt. In gleicher Weise werden beispielsweise mittels eines KOH-Ätzens der Kanal 16 mit einem dreieckigen oder trapezförmigen Querschnitt und die Ausnehmungen 18 und 20 in die zweite Hauptoberfläche des Substrats geätzt. Dadurch sind sowohl der Kanal 16 als auch die Membranen für die Drucksensoren festgelegt. Beim Ätzen der Ausnehmungen 18 und 20 in der zweiten Hauptoberfläche des Substrats werden vorzugsweise gleichzeitig Ausnehmungen für die Zuführungsleitungen 40 und 42 geätzt.

Nachfolgend werden in den Ausnehmungen 18 und 20 die Membranelektroden gebildet. Die Membranelektroden werden vorzugsweise durch das Aufbringen einer Metallisierung auf den Oberflächen der Ausnehmungen 18 und 20 gebildet, wobei gleichzeitig die Metallisierung für die Zuführungsleitungen 40 und 42 aufgebracht werden kann. Alternativ können die Membranelektroden auf der Oberseite der Membranen 22 und 24 durch eine geeignete Dotierung erzeugt werden.

Im Anschluß wird die Abdeckvorrichtung mittels herkömmlicher Chipverbindungstechniken auf der Oberseite des Substrats 10 angebracht. Die Abdeckvorrichtung 30 wird dabei derart angebracht, daß die auf oder in der unteren Oberfläche derselben gebildeten Gegenelektroden 32 und 34 zumindest teilweise die Membranelektroden 22 und 24 überlappend angeordnet sind. Die Abdeckvorrichtung 30 besteht bei dem bevorzugten Ausführungsbeispiel ebenfalls aus Silizium, wobei es jedoch vorteilhaft möglich ist, Pyrex-Glas für die obere Abdeckung 30 zu verwenden, da Pyrex-Glas den gleichen thermischen Ausdehnungskoeffizienten wie Silizium aufweist. Besteht die obere Abdeckung aus Silizium, so kann zwischen den Gegenelektroden 32 und 34 und der oberen Abdeckung eine Isolationsschicht angeordnet sein.

Neben dem oben beschriebenen Verfahren zur Herstellung der erfindungsgemäßen, mikromechanisch gefertigten Flußrestriktionsvorrichtung, können auch mikromechanische Spritzgußverfahren zur Herstellung derselben verwendet werden. Bei derartigen Verfahren werden das Substrat und/oder die Abdeckvorrichtung aus Kunststoff bestehen, wobei das Substrat und die Abdeckvorrichtung mittels geeigneter bekannter Techniken miteinander verbunden sein könnten.

In Abweichung von dem beschriebenen bevorzugten Ausführungsbeispiel der vorliegenden Erfindung ist es ferner möglich, daß eine der beiden Öffnungen nicht in dem Substrat sondern in der Abdeckvorrichtung gebildet ist. In dem Substrat wäre dann nur eine Auslaßöffnung vorgesehen, wobei eine derartige Flußrestriktionsvorrichtung auch nur einen Drucksensor, der auf die oben beschriebene Art und Weise gebildet ist, aufweisen würde.

Gemäß der vorliegenden Erfindung kann die Mikroflußrestriktion ferner an allen Teilen, die mit einem Fluid in Berührung kommen, eine Beschichtung aufweisen. Die Beschichtung schützt die Teile, die beispielsweise mit einem aggressiven Fluid in Berührung kommen, vor diesem Fluid. Beispielsweise können die Unterseite der Abdeckvorrichtung im Bereich des Kanals, der in dem Substrat gebildete Kanal, die Einlaß- und die Auslaß-Öffnung sowie die mit dem Fluid in Berührung kommende Oberfläche der Membran mit einer solchen Schutzschicht versehen sein.

Die mikromechanisch gefertigte Flußrestriktionsvorrichtung gemäß der vorliegenden Erfindung kann mittels bekannter fluidischer Ankopplungen an bestehende Systeme angeschlossen werden. Dazu kann ein ein- oder mehrteiliges Gehäuse verwendet werden, das sogenannte Luer-Verbindungselemente und interne Fluidkanäle passend zur Ein- und Auslaß-Geometrie der Flußrestriktionsvorrichtung aufweist. Die Flußrestriktionsvorrichtung wird auf diese Ein- und Auslaßöffnungen durch ein dichtendes Montageverfahren, z.B. Kleben oder eine Montage mit O-Ringen, aufgesetzt.

## Patentansprüche

1. Mikromechanisch gefertigte Flußrestriktionsvorrichtung mit folgenden Merkmalen:
einer in einer ersten Hauptoberfläche eines Substrats (10) gebildeten ersten Durchlaßöffnung (12),
einem in einer zweiten Hauptoberfläche des Substrats (10) gebildeten Kanal (16), der an einem Ende desselben mit der ersten Durchlaßöffnung (12) fluidmäßig verbunden den ist,
einer zweiten Durchlaßöffnung (14), die mit einem zweiten Ende des Kanals fluidmäßig verbunden ist,
wobei die erste Durchlaßöffnung (12), der Kanal (16) und die zweite Durchlaßöffnung (14) einen Strömungspfad definieren,
einer in Fluidverbindung mit der ersten Durchlaßöffnung (12) stehenden Membran (22), die in dem Substrat (10) gebildet ist;
einer zumindest auf der Membran (22) gebildeten Membranelektrode (26);
einer Abdeckvorrichtung (30), die auf die zweite Hauptoberfläche des Substrats (10) aufgebracht ist, derart, daß die Abdeckvorrichtung (30) zusammen mit dem Kanal (16) einen Flußwiderstand der Flußrestriktionsvorrichtung definiert, wobei die Abdeckvorrichtung (30) eine Gegenelektrode (32) aufweist, die der Membranelektrode (26) beabstandet von derselben gegenüberliegt, derart, daß die Membranelektrode (26) und die Gegenelektrode (32) einen kapazitiven Druckaufnehmer definieren, wobei der kapazitive Druckaufnehmer an einer Wandung des Strömungspfads angeordnet ist.

2. Mikromechanisch gefertigte Flußrestriktionsvorrichtung gemäß Anspruch 1, bei der die zweite Durchlaßöffnung durch die Abdeckvorrichtung (30) gebildet ist.

3. Mikromechanisch gefertigte Flußrestriktionsvorrichtung gemäß Anspruch 1, bei der die zweite Durchlaßöffnung durch das Substrat (10) gebildet ist.

4. Mikromechanisch gefertigte Flußrestriktionsvorrichtung gemäß Anspruch 3, bei der in dem Substrat (10) eine mit der zweiten Durchlaßöffnung (14) in fluidmäßiger Verbindung stehende zweite Membran (24) gebildet ist, wobei zumindest auf der zweiten Membran (24) eine zweite Membranelektrode (28) gebildet ist, und bei der die Abdeckvorrichtung (30) eine zweite Gegenelektrode (34) aufweist, die der zweiten Membranelektrode (28) beabstandet von derselben gegenüberliegt, derart, daß die zweite Membranelektrode (28) und die zweite Gegenelektrode (34) einen weiteren kapazitiven Druckaufnehmer definieren.

5. Mikromechanisch gefertigte Flußrestriktionsvorrichtung gemäß Anspruch 4, bei der Ausnehmungen (18, 20) zumindest teilweise den Durchlaßöffnungen (12, 14) gegenüberliegend in der zweiten Hauptoberfläche des Substrats gebildet sind, derart, daß zwischen jeweils einer Durchlaßöffnung (12, 14) und einer Ausnehmung eine Membran (22, 24) in dem Substrat (10) definiert ist.

6. Mikromechanisch gefertigte Flußrestriktionsvorrichtung gemäß Anspruch 4, bei der die Durchlaßöffnungen (12, 14) derart in der ersten Hauptoberfläche des Substrats (10) gebildet sind, daß sie zusammen mit der zweiten Hauptoberfläche des Substrats (10) die Membranen definieren, wobei die Abdeckvorrichtung in den Bereichen, die den Membranen gegenüberliegen, Ausnehmungen aufweist, in denen die Gegenelektroden angeordnet sind.

7. Mikromechanisch gefertigte Flußrestriktionsvorrichtung gemäß einem der Ansprüche 1 bis 6, bei der das Substrat (10) aus Silizium besteht.

8. Mikromechanisch gefertigte Flußrestriktionsvorrichtung gemäß einem der Ansprüche 1 bis 7, bei der die Abdeckvorrichtung (30) aus Silizium besteht.

9. Mikromechanisch gefertigte Flußrestriktionsvorrichtung gemäß einem der Ansprüche 1 bis 7, bei der die Abdeckvorrichtung (30) aus Pyrexglas besteht.

10. Mikromechanisch gefertigte Flußrestriktionsvorrichtung gemäß einem der Ansprüche 1 bis 9, bei der im Bereich des Kanals (16) ferner ein Temperatursensor vorgesehen ist.

## Claims

1. A micromechanically produced flow-restriction device comprising:
a first passage opening (12) formed in a first main surface of a substrate (10);
a channel (16) which is formed in a second main surface of the substrate (10) and one end of which is in fluid communication with said first passage opening (12);
a second passage opening (14) which is in fluid communication with a second end of the channel,
said first passage opening (12), said channel (16) and said second passage opening (14) defining a flow path,
a membrane (22) which is formed in the substrate (10) and which is in fluid communication with said first passage opening (12);
a membrane electrode (26) formed at least on said membrane (22);
a cover (30) attached to the second main surface of the substrate (10) in such a way that said cover (30) defines together with said channel (16) a flow resistance of the flow-restriction device, said cover (30) being provided with a counterelectrode (32) which is arranged in opposed, spaced relationship with said membrane electrode (26) in such a way that said membrane electrode (26) and said counterelectrode (32) define a capacitive pressure sensor, said capacitive pressure sensor being arranged on a wall of the flow path.

2. A micromechanically produced flow-restriction device according to claim 1, wherein the second passage opening is defined by the cover (30).

3. A micromechanically produced flow-restriction device according to claim 1, wherein the second passage opening is defined by the substrate (10).

4. A micromechanically produced flow-restriction device according to claim 3, wherein a second membrane (24), which is in fluid communication with the second passage opening (14), is formed in the substrate (10), at least said second membrane (24) having formed thereon a second membrane electrode (28), and wherein the cover (30) is provided with a second counterelectrode (34) which is arranged in opposed, spaced relationship with said second membrane electrode (28) in such a way that said second membrane electrode (28) and said second counterelectrode (34) define a further capacitive pressure sensor.

5. A micromechanically produced flow-restriction device according to claim 4, wherein recesses (18, 20) are formed in the second main surface of the substrate such that at least part of said recesses is arranged in opposed relationship with the passage openings (12, 14) in such a way that a respective membrane (22, 24) is defined in the substrate (10) between each of said passage openings (12, 14) and a recess.

6. A micromechanically produced flow-restriction device according to claim 4, wherein the passage openings (12, 14) are formed in the first main surface of the substrate (10) in such a way that they define the membranes together with the second main surface of the substrate (10), the areas of the cover located opposite the membranes being provided with recesses in which the counterelectrodes are arranged.

7. A micromechanically produced flow-restriction device according to one of the claims 1 to 6, wherein the substrate (10) consists of silicon.

8. A micromechanically produced flow-restriction device according to one of the claims 1 to 7, wherein the cover (30) consists of silicon.

9. A micromechanically produced flow-restriction device according to one of the claims 1 to 7, wherein the cover (30) consists of Pyrex glass.

10. A micromechanically produced flow-restriction device according to one of the claims 1 to 9, wherein a temperature sensor is additionally provided in the area of the channel (16).

## Revendications

1. Dispositif de réduction d'écoulement produit selon un procédé micromécanique, aux caractéristiques suivantes :
une première ouverture de passage (12) formée dans une première surface principale d'un substrat (10),
un canal (16) formé dans une seconde surface principale du substrat (10), lequel est relié, à une extrémité de celui-ci, en communication de fluide, à la première ouverture de passage (12),
une seconde ouverture de passage (14), reliée en communication de fluide à une seconde extrémité du canal,
la première ouverture de passage (12), le canal (16) et la seconde ouverture de passage (14) définissant un chemin de circulation,
une membrane (22), formée dans le substrat (10), se trouvant en communication de fluide avec la première ouverture de passage (12),
une électrode de membrane (26) formée au moins sur la membrane (22) ;
un dispositif de recouvrement (30), appliqué sur la seconde surface principale du substrat (10), de telle sorte que le dispositif de recouvrement (30) définisse, ensemble avec le canal (16), une résistance à l'écoulement du dispositif de réduction d'écoulement, le dispositif de recouvrement (30) présentant une contre-électrode (32) face à l'électrode de membrane (26), à une distance de cette dernière, de telle sorte que l'électrode de membrane (26) et la contre-électrode (32) définissent un capteur de pression capacitif, le capteur de pression capacitif étant disposé sur une paroi du chemin de circulation.

2. Dispositif de réduction d'écoulement produit selon un procédé micromécanique suivant la revendication 1, dans lequel la seconde ouverture de passage est formée à travers le dispositif de recouvrement (30).

3. Dispositif de réduction d'écoulement produit selon un procédé micromécanique suivant la revendication 1, dans lequel la seconde ouverture de passage est formée à travers le substrat (10).

4. Dispositif de réduction d'écoulement produit selon un procédé micromécanique suivant la revendication 3, dans lequel est formée, dans le substrat (10), une seconde membrane (24) en communication de fluide avec la seconde ouverture de passage (14), au moins sur la seconde membrane (24) étant formée une seconde électrode de membrane (28), et dans lequel le dispositif de recouvrement (30) présente une seconde contre-électrode (34) face à la seconde électrode de membrane (28), à une distance de celle-ci, de sorte que la seconde contre-électrode (28) et la seconde contre-électrode (34) définissent un autre capteur de pression capacitif.

5. Dispositif de réduction d'écoulement produit selon un procédé micromécanique suivant la revendication 4, dans lequel des évidements (18, 20) sont formés dans la seconde surface principale du substrat, au moins partiellement face aux ouvertures de passage (12, 14), de sorte qu'entre chacune des ouvertures de passage (12, 14) et un évidement est définie, dans le substrat (10), une membrane (22, 24).

6. Dispositif de réduction d'écoulement produit selon un procédé micromécanique suivant la revendication 4, dans lequel les ouvertures de passage (12, 14) sont formées dans la première surface principale du substrat (10) de telle sorte qu'elles définissent, ensemble avec la seconde surface principale du substrat (10), les membranes, le dispositif de recouvrement présentant, dans les zones faisant face aux membranes, des évidements dans lesquels sont disposées les contre-électrodes.

7. Dispositif de réduction d'écoulement produit selon un procédé micromécanique suivant l'une des revendications 1 à 6, dans lequel le substrat (10) est réalisé en silicium.

8. Dispositif de réduction d'écoulement produit selon un procédé micromécanique suivant l'une des revendications 1 à 7, dans lequel le dispositif de recouvrement (30) est réalisé en silicium.

9. Dispositif de réduction d'écoulement produit selon un procédé micromécanique suivant l'une des revendications 1 à 7, dans lequel le dispositif de recouvrement (30) est réalisé en verre Pyrex.

10. Dispositif de réduction d'écoulement produit selon un procédé micromécanique suivant l'une des revendications 1 à 9, dans lequel est, par ailleurs, prévu, à l'endroit du canal (16), un capteur de température.
